(19) Europäisches Patentamt
European Patent Office
Office européen des brevets

(11) EP 3 227 422 B1

(12) **EUROPEAN PATENT SPECIFICATION**

(45) Date of publication and mention of the grant of the patent:
**09.01.2019 Bulletin 2019/02**

(21) Application number: **15801840.8**

(22) Date of filing: **30.11.2015**

(51) Int Cl.:
***C08K 3/013** (2018.01)*
***C11D 3/37** (2006.01)*
***C08K 3/30** (2006.01)*
***C08K 3/22** (2006.01)*
***C11D 11/00** (2006.01)*

(86) International application number:
**PCT/EP2015/078025**

(87) International publication number:
**WO 2016/087351 (09.06.2016 Gazette 2016/23)**

(54) **THERMOPLASTIC POLYAMIDE PARTICLES**

THERMOPLASTISCHE POLYAMIDPARTIKEL

PARTICULES DE POLYAMIDE THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2014 EP 14195598**

(43) Date of publication of application:
**11.10.2017 Bulletin 2017/41**

(73) Proprietor: **BASF SE**
**67056 Ludwigshafen (DE)**

(72) Inventors:
- **KNIESEL, Simon**
  **69469 Weinheim (DE)**
- **KLOKE, Philipp**
  **68167 Mannheim (DE)**
- **SCHOEMER, Martina**
  **67065 Ludwigshafen (DE)**
- **EHRET, Frank**
  **67158 Ellerstadt (DE)**
- **DIETRICH, Matthias**
  **69469 Weinheim (DE)**

(74) Representative: **BASF IP Association**
**BASF SE**
**G-FLP-C006**
**67056 Ludwigshafen (DE)**

(56) References cited:
**DE-A1-102008 001 547**
**US-A- 4 493 783**
**US-A- 5 657 501**
**US-A1- 2013 276 242**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 227 422 B1

## Description

The invention relates to thermoplastic polyamide particles, to methods for producing them, and to their use in laundering processes.
The use of polyamide particles in the cleaning of textiles is *per* se known. WO 2012/056252 relates to an improved laundering and cleaning process wherein textiles are treated with water and with polymer particles which have a cylindrical or spherical shape and have an average density in the range from 0.5 to 2.5 g/cm$^3$ and an average volume in the range from 5 to 275 mm$^3$. The washing drum that it used for the laundering has perforated side walls and is rotated at a speed such as to result in g-forces in the range from 0.05 to 900 g. Polymer particles described as suitable are foamed or unfoamed particles based on polyalkenes such as polyethylene and polypropylene, polyamides, polyesters, or polyurethanes. Indicated as being particularly preferred are nylon, polyethylene terephthalate and polybutylene terephthalate. Exemplary polyamide particles with cylindrical or spherical shape have densities of 1.10 to 1.16 g/cm$^3$. Spherical nylon-6,6 particles with densities in the range from 1.16 to 1.88 g/cm$^3$ are described as well, in table 7, though without indication as to how the density of the particles may be brought about. It is further stated that both the particle density and the particle size affect the recovery of the particles after the laundering operation.

US2013/276242 discloses a method for cleaning a soiled substrate by using polymer particles based on polyamide particles.

When polyamide particles are used in the cleaning of textiles, there is both a color scavenger effect and also a significant support to the laundering effect. The objective of a laundering and cleaning process using polyamide particles is to reduce the levels of water, energy, and detergents employed, while at the same time achieving an improved laundering effect. The circumstances of the procedure, such as uncomplicated and complete removal of the polyamide pellets, a comparable washing cycle time, and the price of the washing machine, ought to offer the end user an attractive alternative to the conventional laundering procedure. The laundering effect is influenced by numerous factors, such as operating temperature, detergent formulation, cycle time, and particle characteristics.
For the known polymer particles, their removal after the end of the laundering operation is capable of further improvement. Moreover, they ought not to be abrasive, in order to treat textiles gently.
It is an object of the present invention to provide polymer particles for use in the above laundering process that are readily removable from the laundry and/or wash liquor and that do not act abrasively to textiles.
According to a further object of the present invention, the laundering effect of the polymer particles is to be improved.

Both objects can be expressed in a generalized form as the provision of thermoplastic polyamide particles which exhibit improved laundering properties in comparison to the prior art.

The objects are achieved in accordance with the invention by means of thermoplastic polyamide particles comprising at least one polyamide and at least one particulate inorganic filler having a density of at least 2.5 g/cm$^3$, the thermoplastic polyamide particles having a density of at least 1.65 g/cm$^3$, preferably at least 1.9 g/cm$^3$, and having an ellipsoidal or approximately ellipsoidal shape with a largest diameter of 1 to 100 mm, preferably 2 to 10 mm, more preferably 3 to 5 mm.

It has been found in accordance with the invention that thermoplastic polyamide particles which have a density of at least 1.65 g/cm$^3$, preferably at least 1.9 g/cm$^3$, and which have an ellipsoidal or approximately ellipsoidal shape with a largest diameter of 1 to 100 mm, preferably 2 to 10 mm, more preferably 3 to 8 mm, for example 3 to 5 mm, are easily removed after the end of the laundering operation and, moreover, do not act abrasively on the textiles to be laundered, since they do not have any sharp edges.

Preferably, the inorganic filler is a particulate filler, having a $D_{50}$-value of the particle size distribution of at least 10 $\mu$m. More preferably, the $D_{50}$-value is in the range of from 10 to 25 $\mu$m, most preferably 15 to 25 $\mu$m.

Additionally preferable are fillers with a rather broad particle size distribution, i.e. a span of at least 2.5 $\mu$m, more preferably at least 3.5 $\mu$m and most preferably at least 4.0 $\mu$m.

The span of the particle size distribution is based on the $D_{10}$, $D_{50}$ and $D_{90}$ value and describes the broadness of the particle size distribution.

$$\text{Span} = (D_{90}-D_{10})/D_{50}$$

The method of establishing the $D_{50}$ and $D_{90}$, each relating to the volume, is preferably by laser diffraction (Fraunhofer diffraction). A particularly preferred method utilizes a Mastersizer (e.g. a 3000) available from Malvern. In the measurement method, the particulate inorganic filler is preferably dispersed in a liquid medium (especially water) and the preferred dispersal method is 30 seconds of ultrasonication, optionally with small amounts of a surfactant or dispersant to aid dispersal. A particularly suitable measurement method is described in Technics - New Materials 21 (2012) 11-20.

It has been found additionally that $BaSO_4$ fillers, having a $D_{50}$-value of the particles size distribution of at least

10 μm, preferably in the range of 10 to 25 μm, more preferably 15 to 25 μm, and preferably a particle size distribution of the $BaSO_4$ with a peak width at half greater than 25 μm, more preferably greater than 45 μm and most preferably greater than 70 μm lead to filled thermoplastic polyamide particles, having a regular elliptical shape especially at high loading levels of the filler and can be easily produced by extrusion processes.

The invention thus furthermore relates to thermoplastic polyamide particles comprising at least one polyamide and at least one inorganic filler, which is a particulate $BaSO_4$ filler, having a $D_{50}$-value of the particle size distribution of at least 10 μm and/or a $D_{90}$-value of at least 15 μm, preferably at least 40 μm. Preferably, the $D_{50}$-value is in the range of from 10 to 25 μm, more preferably 15 to 25 μm.

The $D_{90}$-value is preferably at least 15 μm, more preferably at least 40, and preferably in the range from 40 to 120 μm.

The object is also achieved by a method for producing such thermoplastic polyamide particles by extruding the ingredients and subsequently shaping, the shaping preferably being a pelletizing, more particularly an underwater pelletizing.

The object is also achieved through the use of the above thermoplastic polyamide particles in laundering processes, preferably wherein unclean textiles are cleaned by agitating the textiles in the presence of a cleaning composition comprising the polyamide particles and a liquid medium.

Without wishing to be limited by any particular theory it is believed that cleaning particles with a higher density separate better from the cleaned substrate at the end of the cleaning procedure and that using a dense filler achieves this very effectively whilst still permitting the use of low density nylon thermoplastics which offer excellent cleaning characteristics and recyclability. Furthermore, the use of inorganic filler particles having a $D_{50}$ size of at least 10 microns and of a $D_{90}$ size of at least 15 microns permits higher proportions of inorganic filler to be incorporated into the thermoplastic resin without affecting the particle melt rheology and final morphology so adversely that it becomes difficult or impractical to find suitable methods for preparing the cleaning particles, especially in the more desired shapes such as ellipsoids and spheres and at the smaller sizes such as from 1 to 10mm in length.

The word textile as used herein preferably means a woven material comprising fibres, typically fibres which are twisted into a yarn.

The substrate may be in the form of, for example, towels, clothes, sheets, footwear or bags. Examples of suitable clothes include shirts, trousers, skirts, coats, socks, jumpers and the like.

The textile can be made from fibres of any suitable material; preferably the textile is or comprises one or more fibres made of wool, cellulose, silk, nylon, polyester or acrylic.

The substrate is preferably soiled. Examples of soil contaminants include: body fluids and body products (e.g. blood, sweat, grime, sebum), grass, food (e.g. egg, chocolate, curry, wine, flour, tomato), drink (especially fruit juices, coffee and tea), mud, ink (e.g. from pens and felt tips), cosmetics (makeup) and oils (e.g. motor oil).

The thermoplastic polyamide particles of the invention have an ellipsoidal or approximately ellipsoidal shape with a largest diameter of preferably 2 to 10 mm, more preferably 3 to 8 mm.

An ellipsoid is understood in accordance with the invention to be a three-dimensional analog of an ellipse, which in the three-dimensional space can be explained as a stretched or compressed (affine) image of a spherical surface (sphere). With use of Cartesian coordinates and orientation of the coordinate axes x, y and z in accordance with the axes of symmetry of the ellipsoid, its equation may be $(x^2/a^2) + (y^2/b^2) + (Z^2/C^2) - 1 = 0$, with the positive real numbers a, b, and c corresponding to the lengths of the semiaxes. For different lengths of the semiaxes there are four distinct cases between which differentiation may be made:

$a > b > c$ leads to a triaxial ellipsoid.

$a = b > c$ leads to a flattened ellipsoid.

$a = b < c$ leads to an extended or stretched ellipsoid.

$a = b = c$ leads to a spherical form.

If two of the semiaxes have the same length, the corresponding ellipsoid spanned by these two semiaxes has a circular cross section.

Ellipsoids of the invention are distinguished by the absence of sharp edges; instead, the ellipsoid is rounded off on all sides.

In the ellipsoid of the invention, the lengths of the semiaxes a, b, and c may be selected freely, and they may therefore represent true ellipsoids or else spherical shapes. Semiaxes a, b, and c of different lengths may result in different diameters. In accordance with the invention, the ellipsoids or thermoplastic polyamide particles have a largest diameter of 3 to 8mm, preferably 4 to 7 mm. The largest diameter here is typically twice the longest semiaxis of the

ellipsoid. The largest diameter therefore refers to an imaginary axis through the center point of the ellipsoid, said axis having the greatest length.

An approximately ellipsoidal shape in accordance with the invention is a shape which deviates from the shape of an ideal ellipsoid as a result, for example, of protrusions and indentations in the surface of the ellipsoid. Corresponding protrusions and intrusions of the ellipsoid, and also curvatures of the ellipsoid, lead to altered diameters of the ellipsoid at these points. In accordance with the invention, an approximately ellipsoidal shape is characterized by the diameter of the ellipsoid at any, arbitrarily selected position of the ellipsoid deviating by not more than 20%, preferably not more than 10%, more particularly not more than 5% from the corresponding diameter of an ideal ellipsoid.

In the course of the production of the thermoplastic polyamide particles, particularly at the pelletizing stage, there are frequently certain scatterings in the lengths of the semiaxes of the resultant ellipsoids. Very substantially identical ellipsoids are obtained typically by shaping methods in which the thermoplastic polyamide is compression molded, injection molded, or cast into a shape.

In the course of the inventively preferred shaping by extrusion of the ingredients and subsequent shaping by pelletizing, preferably underwater pelletizing, there is a certain scatter of the ellipsoid shapes and deviations from the ideal shape.

Particularly preferred ellipsoids are those which deviate from a spherical shape.

The particles preferably have an aspect ratio, in order of increasing preference, of less than 1.5, 1.4, 1.3, 1.28, 1.25, 1.22, 1.20, 1.17, 1.15 and 1.12. Of course, the lowest possible aspect ratio is 1.0. These ratios correspond to a shape which is more smooth and ellipsoidal/spherical and which separates better at the end of the wash cycle. The aspect ratio is calculated by measuring the largest and the smallest linear dimensions for each particle. From this an aspect ratio for each particle can be calculated and the number average of many particles can then be taken. The preferred method for measuring the particle largest and smallest linear dimension is by using a vernier caliper.

Preferably, the number average size or aspect ratio of the cleaning particles are the result of measurements from at least 10, more preferably at least 20 and most preferably at least 30 cleaning particles.

The aspect ratio for particles of the invention is most preferably below 1.2.

The (approximately) ellipsoidal shape and the aspect ratio can be determined visually or preferably by an optical/digital imaging method in which e. g. one or more digital images of the particles or their shadows are analyzed, for example automatically or computer-based. For example, a camsizer (Retsch Technology) may be employed which employs two CCD-cameras and stroboscopic light for a dynamic image analysis of the shadows that the particles project on a screen.

The thermoplastic polyamide particles of the invention comprise at least one polyamide. This polyamide may be selected arbitrarily.

Polyamides are understood to be homopolymers or copolymers of synthetic, long-chain polyamides, which as an essential constituent have amide groups repeatingly in the main polymer chain. Examples of such polyamides are nylon-6 (polycaprolactam), nylon-6,6 (polyhexamethyleneadipamide), nylon-4,6 (polytetramethyleneadipamide), nylon-5,10 (polypentamethyleneadipamide), nylon-6,10 (polyhexamethylenesebacamide), nylon-7 (polyenantholactam), nylon-11 (polyundecanolactam), and nylon-12 (polydodecanolactam). These polyamides carry the generic name nylon.

Polyamides can be produced in principle by two methods.

In the polymerization from dicarboxylic acids and diamines, as in the polymerization from amino acids, the amino and carboxyl end groups of the starting monomers or starting oligomers react with one another to form an amide group and water. The water can be subsequently removed from the polymer composition. In the case of the polymerization from carboxamides, the amino and amide end groups of the starting monomers or starring oligomers react with one another to form an amide group and ammonia. The ammonia may be subsequently removed from the polymer composition.

Examples of suitable starting monomers or starting oligomers for the production of polyamides are as follows:

(1) $C_2$ to $C_{20}$, preferably $C_3$ to $C_{18}$ amino acids, such as 6-aminocaproic acid, 11-aminoundecanoic acid, and also the dimers, trimers, tetramers, pentamers, or hexamers thereof,

(2) $C_2$ to $C_{20}$ amino acid amides, such as 6-aminocaproamide, 11-aminoundecanamide, and the dimers, trimers, tetramers, pentamers, or hexamers thereof,

(3) reaction products of

(3a) $C_2$ to $C_{20}$, preferably $C_2$ to $C_{12}$ alkylenediamines, such as tetramethylenediamine or preferably hexamethylenediamine,

with

(3b) a $C_2$ to $C_{20}$, preferably $C_2$ to $C_{14}$ aliphatic dicarboxylic acid, such as sebacic acid, decanedicarboxylic acid, or adipic acid,

and also the dimers, trimers, tetramers, pentamers, or hexamers thereof,

(4) reaction products of (3a), with

(4b) a $C_8$ to $C_{20}$, preferably $C_8$ to $C_{12}$ aromatic dicarboxylic acid or derivatives thereof, as for example chlorides, such as 2,6-naphthalenedicarboxylic acid, preferably isophthalic acid or terephthalic acid,
and also the dimers, trimers, tetramers, pentamers, or hexamers thereof,

(5) reaction products of (3a), with

(5b) a $C_9$ to $C_{20}$, preferably $C_9$ to $C_{18}$ arylaliphatic dicarboxylic acid or derivatives thereof, as for example chlorides, such as o-, m-, or p-phenylenediacetic acid,
and also the dimers, trimers, tetramers, pentamers, or hexamers thereof,

(6) reaction products of

(6a) $C_6$ to $C_{20}$, preferably $C_6$ to $C_{10}$ aromatic diamines, such as m- or p-phenylenediamine, with (3b)
and also the dimers, trimers, tetramers, pentamers, or hexamers thereof,

(7) reaction products of

(7a) $C_7$ to $C_{20}$, preferably $C_8$ to $C_{18}$ arylaliphatic diamines, such as m- or p-xylylenediamine, with (3b)
and also the dimers, trimers, tetramers, pentamers, or hexamers thereof,

(8) monomers or oligomers of a $C_2$ to $C_{20}$, preferably $C_2$ to $C_{18}$ arylaliphatic or preferably aliphatic lactam, such as enantholactam, undecanolactam, dodecanolactam, or caprolactam,

and also homopolymers, copolymers, or mixtures of such starting monomers or starting oligomers.

Preference here is given to those starting monomers or starting oligomers which on polymerization lead to the polyamides nylon-6, nylon-6,6, nylon-4,6, nylon-5,10, nylon-6,10, nylon-7, nylon-11, nylon-12, more particularly to nylon-6 and nylon-6,6.

Mention may also be made, moreover, of polyamides which are obtainable, for example, by condensation of 1,4-diaminobutane with adipic acid at elevated temperature (nylon-4,6). Production processes for polyamides with this structure are described in EP-A 38 094, EP-A 38 582, and EP-A 39 524, for example.

The preparation of the polyamides is conventional or may take place in accordance with processes that are known *per se.* Thus the polymerization or polycondensation of the starting monomers may be performed under customary process conditions, and the reaction may take place continuously or discontinuously.

Also possible is the use of polyamides which have been prepared by copolycondensation of two or more of the abovementioned monomers or their components, examples being copolymers of adipic acid, isophthalic acid or terephthalic acid, and hexamethylenediamine, or copolymers of caprolactam, terephthalic acid, and hexamethylenediamine. Partially aromatic copolyamides of these kinds contain 40 to 90 wt.% of units deriving from terephthalic acid and hexamethylenediamine. A small fraction of the terephthalic acid, preferably not more than 10 wt.% of the total aromatic dicarboxylic acids employed, may be replaced by isophthalic acid or by other aromatic dicarboxylic acids, preferably those in which the carboxyl groups are in para-position.

One partly aromatic polyamide is nylon-9T, which derives from nonanediamine and terephthalic acid.

As monomers it is also possible to contemplate cyclic diamines such as those of the general formula

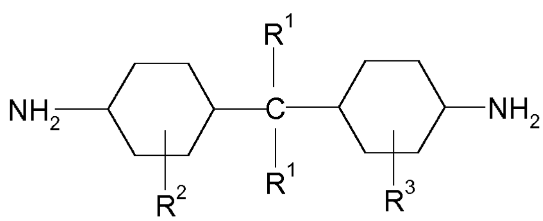

in which

$R^1$ is hydrogen or a $C_1$-$C_4$ alkyl group,

$R^2$ is a $C_1$-$C_4$ alkyl group or hydrogen, and
$R^3$ is a $C_1$-$C_4$ alkyl group or hydrogen.

Particularly preferred such diamines are bis(4-aminocyclohexyl)methane, bis(4-amino-3-methylcyclohexyl)methane, 2,2-bis(4-aminocyclohexyl)propane, or 2,2-bis(4-amino-3-methylcyclohexyl)propane. Further such diamines include 1,3- or 1,4-cyclohexanediamine or isophoronediamine. As well as the units deriving from terephthalic acid and hexamethylenediamine, the partly aromatic copolyamides include units which derive from ε-caprolactam and/or units which derive from adipic acid and hexamethylenediamine.

The fraction of units which derive from ε-caprolactam is up to 50 wt.%, preferably 20 to 50 wt.%, more particularly 25 to 40 wt.%, while the fraction of units which derive from adipic acid and hexamethylenediamine is up to 60 wt.%, preferably 30 to 60 wt.%, and more particularly 35 to 55 wt.%.

The copolyamides may also comprise units of ε-caprolactam and units of adipic acid and hexamethylenediamine; in this case it should be ensured that the fraction of units which are free from aromatic groups is at least 10 wt.%, preferably at least 20 wt.%. The ratio of the units deriving from ε-caprolactam to the units deriving from adipic acid and hexamethylenediamine is not subject to any particular restriction here.

The partly aromatic copolyamides may be prepared, for example, by the process described in EP-A-129 195 and EP-A-129 196.

The following, nonconclusive schedule comprises the polyamides mentioned and also further polyamides within the meaning of the invention, and the monomers comprised.

AB polymers:

| | |
|---|---|
| PA 4 | pyrrolidone |
| PA 6 | ε-caprolactam |
| PA 7 | ethanolactam |
| PA 8 | caprylolactam |
| PA 9 | 9-aminopelargonic acid |
| PA 11 | 11-aminoundecanoic acid |
| PA 12 | laurolactam |

AA/BB polymers

| | |
|---|---|
| PA 46 | tetramethylenediamine, adipic acid |
| PA 66 | hexamethylenediamine, adipic acid |
| PA 69 | hexamethylenediamine, azelaic acid |
| PA 610 | hexamethylenediamine, sebacic acid |
| PA 612 | hexamethylenediamine, decanedicarboxylic acid |
| PA 613 | hexamethylenediamine, undecanedicarboxylic acid |
| PA 1212 | 1,12-dodecanediamine, decanedicarboxylic acid |
| PA 1313 | 1,13-diaminotridecane, undecanedicarboxylic acid |
| PA 6T | hexamethylenediamine, terephthalic acid |
| PA 9T | 1,9-nonanediamine, terephthalic acid |
| PA MXD6 | m-xylylenediamine, adipic acid |
| PA 6I | hexamethylenediamine, isophthalic acid |
| PA 6-3-T | trimethylhexamethylenediamine, terephthalic acid |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 6I/6T | (see PA 6I and PA 6T) |
| PA PACM 12 | diaminodicyclohexylmethane, laurolactam |
| PA 6I/6T/PACM | as PA 6I/6T + diaminodicyclohexylmethane |
| PA 12/MACMI | laurolactam, dimethyldiaminodicyclohexylmethane isophthalic acid |
| PA 12/MACMT | laurolactam, dimethyldiaminodicyclohexylmethane, terephthalic acid |

PA PDA-T phenylenediamine, terephthalic acid

Particularly preferred in accordance with the invention is the use of aliphatic polyamides. In this context, mixtures of aliphatic polyamides may also be used.

With particular preference the at least one polyamide is nylon-6, nylon-6,6, or a blend or copolymer of these polyamides.

Preferred polyamides are therefore polyhexamethyleneadipamide, polyhexamethylenesebacamide, and polycaprolactam, and also copolyamides 6/66, more particularly with a fraction of 5 to 95 wt.% of caprolactam units (e.g., Ultramid®C33from BASF SE). Additionally suitable polyamides are obtainable from ω-aminoalkylnitriles such as, for example, aminocapronitrile (PA 6) and adiponitrile with hexamethylenediamine (PA 66) by means of what is known as direct polymerization in the presence of water, as described in DE-A 10313681, EP-A 1198491, and EP 922065.

The polyamides used in accordance with the invention preferably have a viscosity number in the range from 90 to 350 ml/g, more preferably from 110 to 240 ml/g, measured in accordance with ISO 307.

In the thermoplastic polyamide particles of the invention, this polyamide is combined with at least one particulate inorganic filler, which has a density of at least 2.5 g/cm$^3$, preferably at least 4 g/cm$^3$. The upper limit for the density is preferably 20 g/cm$^3$, more preferably 10 g/cm$^3$.

Particulate inorganic fillers which may be used are any suitable materials which have the density according to the invention and which do not give the thermoplastic polyamide particles any disadvantageous properties or lead to properties which adversely affect the laundering process using the thermoplastic polyamide particles. Under production and application conditions, the behavior of the particulate inorganic fillers ought to be inert.

The particulate inorganic filler material preferably is or comprises one or more fillers selected from a metal salt, a metal oxide, a metal carbide, a metal nitride, a ceramic, a metal, an alloy and combinations thereof. The inorganic filler preferably is or comprises a metal oxide, a metal salt, a metal or an alloy, more preferably is or comprises a metal oxide or a metal salt and especially is or comprises a metal salt.

Preferred metals include barium, bismuth, chromium, cadmium, copper, cobalt, gold, iron, iridium, lead, molybdenum, nickel, osmium, palladium, platinum, silver, tungsten and tin.

Preferred alloys include bronze, brass, rose metal, steel and ferro alloys, pewter, solder, nichrome and constantan.

Preferred metal salts are in the form of nitrate, carbonate, hydrogencarbonate, hydroxide, phosphate, silicate, hydrogen phosphate, halide (especially fluoride, chloride, bromide and iodide), acetate and sulfate.

Suitable metal salts include calcium silicate (especially wollastanite), calcium carbonate (especially chalk), magnesium silicate (especially talc) and barium sulfate (either synthetic or barite). A particularly preferred metal salt is barium sulfate.

Suitable metal oxides include iron oxide (especially magnetite), bismuth oxide, titanium oxide, aluminium oxide, silicon dioxide (especially quartz).

Preferably, the inorganic filler has a Mohr's hardness of less than 8, more preferably less than 7, yet more preferably less than 6, even more preferably less than 5 and especially less than 4. For reference diamond has a Mohr hardness of 10, barium sulfate has a Mohr hardness of 3 and gypsum has a Mohr hardness of 2. The use of inorganic fillers with a relatively low Mohr's hardness helps in several respects. Firstly, the use of low hardness inorganic fillers is thought to help to prevent undesirable abrasion on the textile substrate which would tend to cause damage to the textile. In addition, the use of low hardness inorganic fillers is of assistance in hot melt mixing and extrusion of the filler with the polyamide as it reduces or prevents the tendency for the filler to abrade, wear or damage the apparatus used to mix and extrude these materials.

These fillers ought not to dissolve in water, or to do so only in minor amounts, and also not to exhibit any reaction with water. Preference is given to using metals or metal oxides or metal sulfides metal sulfates. An example of suitable metals is iron.

Examples of suitable metal oxides are $TiO_2$, $Fe_2O_3$.

The inorganic filler is preferably selected from $BaSO_4$, $TiO_2$, ZnS metals, or mixtures thereof. $BaSO_4$, ZnS or a mixture of both is employed as filler with particular preference. Of particular relevance is Lithopone. Lithopone is produced by coprecipitation of barium sulfate and zinc sulfide. Most commonly coprecipitation is effected by combining equimolar amounts of zinc sulfate and barium sulfide. This route affords a product that is 29.4 wt % ZnS and 70.6 wt % $BaSO_4$

The filler has a particle size which permits the production of ellipsoids preferably having a largest diameter of 2 to 10 mm, preferably of 3 to 5 mm with a smooth surface. The maximum diameter of the filler ought therefore to be well below the smallest diameter of the ellipsoid.

Preferably, the inorganic filler has a $D_{50}$-value of the particle size distribution of at least 10 μm, more preferably in the range of from 10 to 25 μm, most preferably in the range of from 15 to 25 μm.

Metals may be used in the form, for example, of metal beads. Metals with high density are iron or tungsten, for

example.

Metal oxides with high density are $Fe_2O_3$, $TiO_2$, for example.

The amount of particulate inorganic fillers, based on the completed thermoplastic polyamide particles, is preferably 41 to 80 wt.%, more preferably 50 to 80 wt.%.The remaining fraction is accounted for by the at least one polyamide and any other ingredients.

Preferably, the cleaning particles comprise in order of increasing preference at least 40v%, 45v%, 50v% and 55v% of polyamide. The present inventors have found that if too little thermoplastic polyamide is present it becomes difficult to prepare cleaning particles having a desirable shape, especially spheres and ellipsoids. In addition the cleaning particles may become friable when too little polyamide is present in the cleaning particles. Preferably, in order of increasing preference the cleaning particles comprise no more than 90v%, 85v%, 80v%, 75v%, 70v%, 65v% and 60v% of polyamide. The present inventors have found that if too much polyamide is present it becomes difficult to obtain cleaning particles having the preferred average densities as mentioned below and thereby the more preferred separation and cleaning performance characteristics are not as well achieved. The volume % of polyamide in the particle can be determined by suitable analytical tools conventional in the art, and/or derived from determination of the mass % of the polyamide in the particle and the density thereof, again using suitable analytical tools conventional in the art.

Suitable methods for establishing the volume% of polyamide in the cleaning particles include ashing and solvent extraction. In ashing a known volume of cleaning particles are burned to an ash. The ashing is preferably performed in air at a temperature of above 500°C. Any of the known standard methods can be applied including ASTM D2584, D5630 and ISO 3451. The initial $V_I$ and final ashed $V_{FA}$ volumes can be established by pycnometry, preferably by helium gas pycnometry. The volume% of polyamide can be given by $(V_I-V_{FA})/V_I$. One suitable example of a pycnometer is that sold by Micromeritics as the Quantachrome micropycnometer. Solvent extraction can be performed on a known volume of cleaning particles. Preferred solvents include concentrated sulphuric acid, resourcinol, cresol, phenol, chlorophenol, xylenols and especially formic acid. The cleaning particles can be extracted under reflux using any of these solvents, typically for around 16 hours. The remaining unextracted material can be dried. The volume of the initial $V_I$ and the dired unextracted $V_{UE}$ material can be determined by pycnometry, especially helium pynometry. The volume% of the polyamide is then given by $(V_I - V_{UE}) / V_I \times 100$.

The particulate inorganic filler is used in an amount such that the thermoplastic polyamide particles have a density of at least 1.65 g/$cm^3$, preferably of at least 1.9 g/$cm^3$, more particularly of at least 2.0 g/$cm^3$. The upper limit for the density of the thermoplastic polyamide particles is initially not restrictive. A preferred upper limit is 4 g/$cm^3$, more preferably 3 g/$cm^3$ for the density of the thermoplastic polyamide particles.

The thermoplastic particles of the invention may comprise customary processing aids such as stabilizers, antioxidants, agents to counteract thermal decomposition and decomposition by ultraviolet light, lubricants and mold release agents, colorants such as pigments, nucleators, plasticizers, etc.

Thus the particles of the invention may comprise 0.05 to 3, preferably 0.1 to 1.5, and more particularly 0.1 to 1 wt.% of a lubricant.

Preferred are Al, alkali metal, and alkaline earth metal salts, or esters or amides, of fatty acids having 10 to 44 C atoms, preferably having 12 to 44 C atoms.

The metal ions are preferably alkaline earths, Zn, and Al, with Ca or Mg being particularly preferred.

Preferred metal salts are Ca stearate and Ca montanate, and also Al stearate.

Mixtures of different salts may also be used, in which case the mixing ratio is arbitrary.

The carboxylic acids may be monobasic or dibasic. Examples include pelargonic acid, palmitic acid, lauric acid, margarinic acid, dodecanedioic acid, behenic acid, and, with particular preference, stearic acid, capric acid, and montanic acid (mixture of fatty acids with 30 to 40 C atoms).

The aliphatic alcohols may be monohydric to tetrahydric. Examples of alcohols are n-butanol, n-octanol, stearyl alcohol, ethylene glycol, propylene glycol, neopentyl glycol, and pentaerythritol, with glycerol and pentaerythritol being preferred.

The aliphatic amines may be monofunctional to trifunctional. Examples thereof are stearylamine, ethylenediamine, propylenediamine, hexamethylenediamine, di(6-aminohexyl)amine, with ethylenediamine and hexamethylenediamine being particularly preferred. Preferred esters or amides are, correspondingly, glycerol distearate, glycerol tristearate, ethylenediamine distearate, glycerol monopalmitate, glycerol trilaurate, glycerol monobehenate, and pentaerythritol tetrastearate.

Mixtures of different esters or amides, or esters with amides in combination, may also be used, in which case the mixing ratio is arbitrary.

The particles of the invention may comprise antioxidants, such as sterically hindered phenols, for example, in amounts of 0.01 to 1, preferably of 0.05 to 0.3 wt.%.

Suitable sterically hindered phenols are in principle all compounds with a phenolic structure which on the phenolic ring have at least one sterically bulky group.

Examples of compounds contemplated are preferably those of the formula

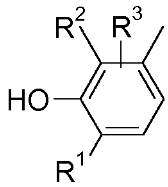

in which:
$R^1$ and $R^2$ are an alkyl group, a substituted alkyl group, or a substituted triazole group, where the radicals $R^1$ and $R^2$ may be identical or different, and $R^3$ is an alkyl group, a substituted alkyl group, an alkoxy group, or a substituted amino group.

Antioxidants of the type stated are described in DE-A 27 02 661 (US- 4 360 617), for example.

A further group of preferred sterically hindered phenols derives from substituted benzenecarboxylic acids, more particularly from substituted benzenepropionic acids.

Particularly preferred compounds from this class are compounds of the formula

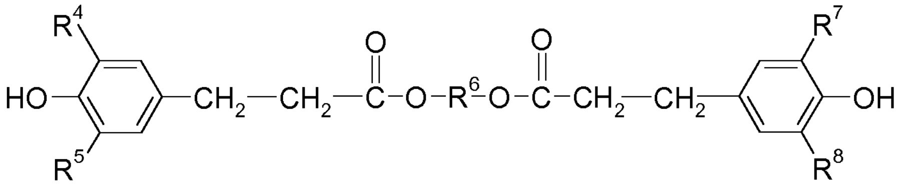

where $R^4$, $R^5$, $R^7$, and $R^8$ independently of one another are $C_1$-$C_8$ alkyl groups, which may in turn be substituted (at least one of them is a sterically bulky group), and $R^6$ is a divalent aliphatic radical having 1 to 10 C atoms, which in the main chain may also have C-O bonds.

Preferred compounds which conform to this formula are

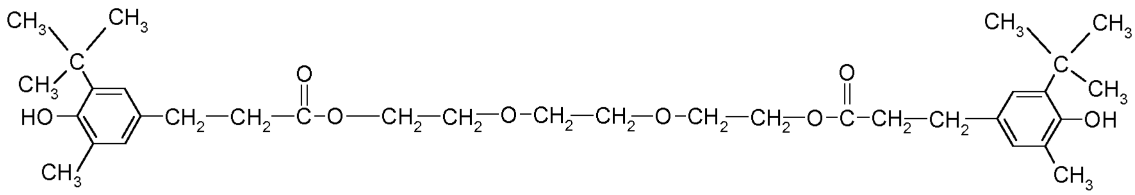

(Irganox® 245 from BASF SE)

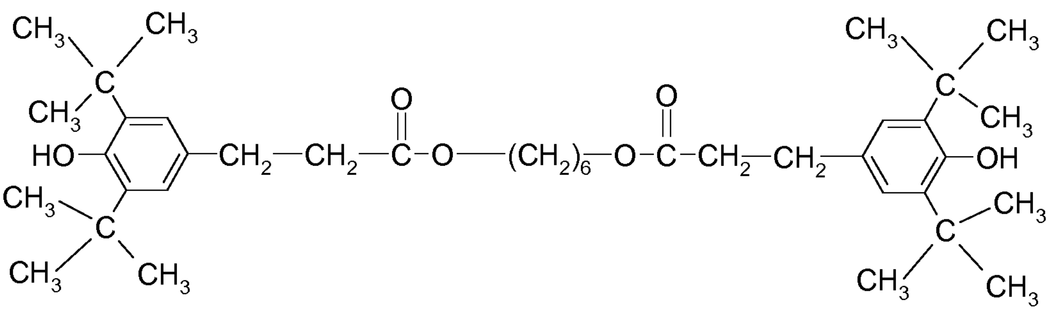

(Irganox® 259 from BASF SE)

Mention may be made overall, as examples of sterically hindered phenols, of the following: 2,2'-methylenebis(4-methyl-6-tert-butylphenol), 1,6-hexanediol bis[3-(3,5-di-tert-butyl-4-hydroxyphenyl)propionate], pentaerythritol tetrakis[3-(3,5-di-tert-butyl-4-hydroxyphenyl)-propionate], distearyl 3,5-di-tert-butyl-4-hydroxybenzylphosphonate, 2,6,7-trioxa-1-phosphabicyclo[2.2.2]oct-4-ylmethyl 3,5-di-tert-butyl-4-hydroxyhydrocinnamate, 3,5-di-tert-butyl-4-hydroxyphenyl-3,5-distearylthiotriazylamine, 2-(2'-hydroxy-3'-hydroxy-3',5'-di-tert-butylphenyl)-5-chlorobenzotriazole, 2,6-di-tert-butyl-4-hydroxymethylphenol, 1,3,5-trimethyl-2,4,6-tris(3,5-di-tert-butyl-4-hydroxybenzyl)benzene, 4,4'-methylenebis(2,6-di-tert-butylphenol), 3,5-di-tert-butyl-4-hydroxybenzyldimethylamine.

Having proven particularly effective, and consequently used with preference, are 2,2'-methylenebis(4-methyl-6-tert-butylphenol), 1,6-hexanediol bis[3-(3,5-di-tert-butyl-4-hydroxyphenol)propionate] (Irganox® 259), pentaerythrityl tetrakis[3-(3,5-di-tert-butyl-4-hydroxyphenyl)propionate], and also N,N'-hexamethylenebis-3,5-di-tert-butyl-4-hydroxyhydrocinnamide (Irganox® 1098) and the above-described Irganox® 245 from BASF SE.

In certain cases, sterically hindered phenols having not more than one sterically hindered groups in ortho-position to the phenolic hydroxyl group has proven particularly advantageous, particularly when assessing the color stability on storage in diffuse light over prolonged periods.

Another group of preferred antioxidants are the so-called copper stabilizers, in amounts of 0.02 to 1 wt.%, preferably 0.05 to 0.5 wt.%.

These copper stabilizers consist in general of two components, these being a mixture of copper compounds and specific halogen salts. The customary copper compounds are the copper(I) halides and also copper salts, such as copper acetate, copper sulfate, or copper stearate, and the copper complexes, as for example copper acetylacetonate. For these compounds to be effective as antioxidants, halogen compounds in large excess must be added. Use is made here more particularly of potassium iodide, but also potassium bromide. The amount used is customarily selected such that the molar copper:halogen ratio is 1:5-15. The recommended amount for addition is generally 30 to 200 ppm of copper. Preference, moreover, is given to copper complexes with the complex ligands triphenylphosphines, mercaptobenzimidazoles, acetylacetonates, and glycine. Especially preferred are triphenylphosphines and mercaptobenzimidazoles.

Preferred copper complexes used are formed customarily by reaction of copper(I) ions with the phosphine compounds or mercaptobenzimidazole compounds. These complexes may be obtained, for example, by reaction of triphenylphosphine with a chloroform suspension of copper(I) halide (G. Kosta, E. Reisenhofer, and L. Stafani, J. Inorg. Nucl. Chem. 27 (1965) 2581). It is also possible, though, to subject copper(II) compounds to reductive reaction with triphenylphosphine in order thus to obtain the copper(I) addition compounds (F.U. Jardine, L. Rule, A.G. Vohrei, J. Chem. Soc. (A) 238-241 (1970)).

Examples of suitable complexes may be represented by the following formulae:
$[Cu(PPh_3)_3X]$, $[Cu_2X_2(PPh_3)_3]$, $[Cu(PPh_3)X]_4$, and $[Cu(PPh_3)_2)X]$, where X is selected from Cl, Br, I, CN, SCN, or 2-MBI.

Examples of antioxidants and heat stabilizers are sterically hindered phenols and/or phosphites and amines (e.g., TAD), hydroquinones, aromatic secondary amines such as diphenylamines, various substituted representatives of these groups, and mixtures thereof, in concentrations of up to 1 wt.%, based on the weight of the thermoplastic molding compounds.

As UV stabilizers, used generally in amounts of up to 2 wt.%, based on the molding compound, mention may be made of various substituted resorcinols, salicylates, benzotriazoles, and benzophenones.

Inorganic pigments, such as titanium dioxide, ultramarine blue, iron oxide, and carbon black, and also organic pigments, such as phthalocyanines, quinacridones, and perylenes, and also dyes, such as anthraquinones, may be added as colorants.

Nucleators contemplated include sodium phenylphosphinate, aluminum oxide, silicon dioxide, or talc.

Relative to known polyamide particles, the thermoplastic polyamide particles of the invention exhibit improved removal characteristics after the end of cycle in the washing operation. Moreover, they are not abrasive, since they have no sharp edges, and they exhibit advantageous laundering characteristics.

The thermoplastic polyamide particles are produced by extrusion of the ingredients and subsequent shaping, which may be a pelletizing, for example, more particularly an underwater pelletizing.

In this case, first of all, the ingredients of the thermoplastic polyamide particles are mixed with one another.

The sequence in which the components are mixed is arbitrary. Possible, for example, is the production of the molding compounds by the mixing of the starting components in customary mixing apparatus such as screw extruders, preferably twin-screw extruders, Brabender mixers or Banbury mixers, and also kneading apparatuses, with subsequent extrusion. Following the extrusion, the extrudate is cooled and comminuted. The sequence of the mixing components can be varied; accordingly, two or optionally three components may be premixed. It is also possible, though, for all of the components together to be mixed.

In order to obtain extremely homogeneous mixing, intensive commixing is advantageous. For this purpose, generally speaking, average mixing times of 0.2 - 30 minutes at temperatures of 240 - 350°C, preferably 245 - 310°C, are required. Following extrusion, the extrudate is generally cooled and comminuted.

The pelletizing, more particularly the underwater pelletizing, leads to the ellipsoidal or approximately ellipsoidal shapes of the invention, with a largest diameter of 2 to 10 mm, preferably 3 to 5 mm. For a description of the pelletizing process, more particularly the underwater pelletizing, reference may be made to WO 2004/080679: In a first step of the process, the polymer melt is pressed from the extruder through a die. An example of the die that can be used is a perforated-plate pelletizing die, such as a circular-arrangement pelletizing die. Pelletizing dies contemplated are generally heated pelletizing dies, such as those with mandrel/peripheral heating, those of heated-channel type, or those of heat exchanger type. Among these, preference is given to heated-channel and heat-exchanger types.

With preference in accordance with the invention, the polymer melt is pressed in a cutting chamber flooded with a liquid coolant. The cutting chamber surrounds the die, as for example the pelletizing die, and the apparatus used to comminute the polymer melt. The size and shape of the cutting chamber may in principle be freely selected, and depends on practical considerations such as the size of the pelletizing die, the geometry of the knives, the amount of coolant to be transported through the cutting chamber, or the throughput of polymer.

The coolant used is generally water. In principle it is possible to use any water which is optically clear, such as filtered river water, demineralized water or well water, for example.

Use may also be made, however, of other coolants, such as monohydric or polyhydric alcohols, glycol for example, silicone oils or paraffins.

In accordance with one preferred embodiment, the coolant is employed at atmospheric pressure. The temperature of the coolant in this case is generally from 60 to 95°C. The coolant temperature is preferably in the range from 70 to 95°C, more particularly in the range from 80 to 95°C, such as in the range from 80 to 90°C, for example. According to another preferred embodiment, however, the coolant may also be employed under increased pressure. Thus the coolant may be employed at up to 130°C, as for example under increased pressure at a temperature in the range from 60 to 130°C, preferably 70 to 100°C, more particularly 80 to 98°C.

It may therefore be preferable for the pressure to be up to 10 bar, such as from 1 to 8 bar, for example. For example, the pressure may be in the range from 1 to 4, preferably 1 to 3, more particularly 1 to 2 bar. According to one of the preferred embodiments, the coolant in the cutting chamber is under a pressure of at least 1.1 bar. This is particularly preferable when, for example, the coolant has a low boiling point, as for example when water is used as coolant, and the intention is to operate with a coolant temperature of more than 100°C.

In a second step, the polymer melt is comminuted. For this purpose, cutting apparatus such as rotating knives may be provided. Preference in this case is given to using multi-arm rotating knives. For example, knife heads with 6, 8, 12, 14 or more, as for example up to 50, rotating knives are used (their number need not necessarily be an even number). They are generally mounted such that they rotate in the cutting chamber in front of the die, e.g., in front of the heated die plate. The rotary speeds are situated, for example, in the range from 300 to 5000 revolutions per minute. The setting of the knives may be undertaken manually, pneumatically, or hydraulically, or may take place automatically by spring force. These measures are known to the skilled person.

The periods of time between the discharge of the polymer melt and the comminuting of this melt are generally very small. They amount in accordance with the invention to not more than 20 ms, preferably not more than 10 ms, more particularly not more than 5 ms. Since the temperature of the polymer melt on its discharge from the die is generally in the range from 150 to 350°C, preferably 180 to 320°C, more particularly 200 to 300°C, the temperature of the polymer melt during cutting is generally not more than from 10 to 20°C below the discharge temperature.

In accordance with the invention, the pellets obtained in the second step are cooled in a third step. The preferred cooling rate here is dependent on the nature of the polymer. In accordance with the invention, the cooling rate is 2 to 30°C/s, preferably in the range from 5 to 20°C/s, more particularly in the range from 8 to 15°C/s. During the cooling step, the ratio by volume of pellets to coolant is generally from 0.03:1 to 0.12:1, preferably from 0.06:1 to 0.1:1. It is generally preferable for the external temperature of the pellets after the third step to be from 100 to 200°C, preferably from 100 to 150°C. This temperature is determined by taking a defined amount of sample, removing the adherent coolant, and measuring the temperature by means of an IR chamber.

It is preferable for the coolant used to cool the pellets to be the same as that into which the polymer melt is pressed and in which it is comminuted. The third step of the process takes place preferably outside the flooded cutting chamber.

While the pellets are cooling, they are preferably transported at the same time to drying apparatus. Heat may be removed from the cooling medium throughout the entire transport section. Alternatively, heat may be removed from the cooling medium only in parts of the transport section. According to one particularly preferred embodiment, no heat is removed from the cooling medium in a first part of the transport section, and heat is removed from the cooling medium in a second part. The length of the first part may be up to 80% of the overall transport section, and its length may be, for example, up to three quarters of that of the overall transport section.

The pellets may be dried, for example, in customary drying apparatus, of the kind described in the expert literature. Examples of suitable drying apparatus are centrifugal dryers or fluidized-bed dryers. Particularly preferred drying apparatus is that in which it is possible concomitantly to utilize the residual heat present in the pellets after the third step, in order to support the drying process.

The thermoplastic polyamide particles of the invention are used in laundering and cleaning processes, preferably in laundering and cleaning processes for the cleaning of textiles.

Suitable laundering and cleaning processes are known per se and are described in, for example, WO 2007/128962, WO 2010/0949959, WO 2011/064581, WO 2011/098815, WO 2010/128337, WO 2012/056252, WO 2012/035342, WO 2012/035343 and WO 2012/095677.

In one preferred laundering and cleaning process, textiles made unclean in the laundering process are cleaned

by treatment with thermoplastic polyamide particles of the invention and washing water, the treatment being carried out in apparatus comprising a drum with perforated side walls and a capacity of 5 to 50 l per kg of textiles to be cleaned, the thermoplastic polyamide particles being used in a weight ratio to the textiles in the range of 0.1:1-10:1, and the drum with the perforated side walls being rotated at a speed which leads to the development of g-forces in the range from 0.05 to 900 g.

For a closer description of the process, reference may be made in particular to WO 2012/056252. It is possible more particularly to carry out the process steps indicated in claims 1, 31, and 35 of that patent.

The apparatus suitable for performing the process preferably comprises a rotatable cleaning chamber and a particle storage tank suitable for containing the cleaning particles as defined above.

Preferably the apparatus comprises one or more of the following components:

i. a controller;
ii. a display;
iii. a solenoid valve;
iv. a pneumatic valve.

The apparatus preferably comprises a controller. The controller is preferably configured such that the user can select a desired cleaning cycle and/or desired cleaning conditions and the controller then automatically controls the washing apparatus so as to perform the desired cycle and/or to achieve the desired cleaning conditions. The controller is preferably an electronic controller.

The apparatus preferably comprises a display. The display is preferably an electronic display. Examples of suitable displays include those incorporating liquid crystal and light emitting diode displays. Preferably the display shows information including for example the cleaning cycle and/or cleaning conditions selected by the user on the controller. Preferably, the apparatus comprises a controller and a display.

The apparatus can comprise one or more solenoid valves and/or one or more pneumatic valves. These valves can control, for example, the entry of clean liquid medium into the apparatus, the exit of dirty liquid medium from the apparatus and/or the introduction of optional components in the cleaning composition (such as detergent) to the substrate.

The invention is illustrated by the examples below.

Examples

1 Raw materials:

- Ultramid® B40 is a polyamide (PA6) from BASF SE. It has a viscosity number of 250 ml/g. Ultramid C33 is a polyamide (PA6.66) from BASF SE. It has a viscosity number of 195 ml/g.
- Ultramid B27 is a polyamide (PA6) from BASF SE. It has a viscosity number of 150 ml/g.
- Blanc Fixe® N is a type of barium sulfate from Sachtleben. In the examples recited, barium sulfate is used to increase the density. The gross density of the Blanc Fixe® N used is 4.5 g/ml; the $D_{50}$ value of the particle size is 5.8 $\mu$m.
- Portaryte® D150 is a type of barium sulfate from Sibelco. In the examples recited, barium sulfate is used to increase the density. The $D_{50}$ value of the particle size is 13.3 $\mu$m.
- Portaryte® B40/10 is a type of barium sulfate from Sibelco. In the examples recited, barium sulfate is used to increase the density. The $D_{50}$ value of the particle size is 15.7 $\mu$m.

Viscosity numbers were determined in 96% sulfuric acid according to DIN ISO 307.

Particle size distributions of the $BaSO_4$ fillers have been analyzed by laser diffraction method (Fraunhofer diffraction) using a Mastersizer 3000 of Malvern. The samples were dispersed in destilled water treated with an ultrasound source for 30 seconds.

Table 1:

| | $D_{10}$ [$\mu$m] | $D_{50}$ [$\mu$m] | $D_{90}$ [$\mu$m] | $D_{97}$ [$\mu$m] | Span |
|---|---|---|---|---|---|
| Blanc Fixe N | 1.7 | 5.8 | 13.2 | 19.0 | 1.98 |
| Portaryte B40/10 | 8.8 | 15.8 | 26.5 | 32.2 | 1.12 |
| Portaryte D150 | 2.0 | 13.3 | 65.9 | 149.0 | 4.80 |

Compounding:

The Polyamide was extruded with the additives listed below in a twin-screw extruder at a melt temperature of 270-340°C. The additives were metered in via a side feed with a gravimetric metering balance. The twin-screw extruder was followed by underwater pelletizing, which was carried out as described in WO 2004/080679 in Example 1. The particle shape and characteristics can be found in table 2.

Table 2:

| | Ref. 1 | Ex. 2 | Ex. 3 | Ex. 4 | Ex. 5 | Ex. 6 | Ex. 7 | Ex. 8 | Ex.9 | Ex. 10 |
|---|---|---|---|---|---|---|---|---|---|---|
| Ultramid B40 [wt.%] | 100 | | | | | | | | | |
| Ultramid B27 [wt.%] | | | 40 | 35 | 30 | 40 | 35 | 30 | | 30 |
| Ultramid C33 [wt.%] | | 50 | | | | | | | 25 | |
| Blanc **Fixe** N [wt.%] | | 50 | 60 | 65 | 70 | | | | | |
| Portaryt e D150 [wt.%] | | | | | | 60 | 65 | 70 | 75 | |
| Portaryt e B40/10 | | | | | | | | | | 70 |
| **Qualitati ve** Shape | Excell ent | Excelle nt | OK | OK | OK | Excelle nt | Excelle nt | Excelle nt | Excelle nt | OK |
| **Minimu m Diamete r [mm]** | 3.427 | 3.509 | 3.619 | 3.111 | 3.189 | 4.004 | 3.957 | 3.910 | 4.009 | 3.12 |
| **Maximu m Diamete r [mm]** | 4.009 | 4.008 | 4.622 | 4.623 | 4.333 | 4.187 | 4.29 | 4.300 | 4.647 | 3.94 |
| Aspect ratio | 1.172 | 1.14 | 1.280 | 1.505 | 1.372 | 1.048 | 1.086 | 1.10 | 1.162 | 1.26 |
| Density [g/ml] | 1.13 | 1.78 | 2.01 | 2.15 | 2.31 | 1.98 | 2.10 | 2.15 | 2.39 | 2.11 |

Measurements:

The assessment of the overall polymer particle shape is done visually:

Excellent: Overall shape is elliptical, aspect ratio < 1.2
OK: Overall shape close to cylindrical, aspect ratio > 1.2

The dimensions of the polymer particles were determined using a vernier caliper. The measurements were repeated on 30 particles in order to get statistical information on the distribution of the sizes and the aspect ratio.
The density of the particles was evaluated using a pyknometer according to DIN ISO 1183-1:2012.
The increase in density through incorporation of the heavy filler $BaSO_4$ is clear from reference 1 and examples 1 to 5.
According to the data given in table 2 it can be concluded that fine particular fillers with a narrow particle size distribution as they are used regularly in paints like Blanc fixe N, having a D50 of 5.8 $\mu$m and a narrow particle size distribution lead to less favorable processing conditions especially when dosed in high loadings (higher than 50 wt%). This is especially noticeable in strong process fluctuations like changes in melt pressure. These formulations are therefore not appropriate to get round/elliptical particles especially at loading levels > 50%. As it can be seen from the table with loadings higher than 50 wt% the particle form changes from round to cylindrical being not applicable for washing processes

anymore since the separation of the particles and the laundering goods through the perforated drum is hindered. This can be observed especially for aspect ratios of > 1.2. These difficulties cannot be overcome through changes in processing parameters.

Similar processing characteristics can be observed using Portaryte B40/10 at high loading levels.

In contrast to these results Portaryte D150, leads to completely different processing characteristics even at very high loading levels (> 60wt%), being easily dosable and enabling a processing with limited fluctuations in melt pressure. This enables very high filler loading while retaining a very well defined and constant elliptical granulate shape with a very narrow particle size distribution and a low and constant aspect ratio.

The application of particles with increased densities leads to an improved separation of the beads after the washing cycles from the clothes.

## 2 Cleaning

### 2.1 Cleaning Examples and Methods

The following cleaning particles as prepared in part 1 above were selected for cleaning experiments: Comparative Example Ref 1 and Example 8.

The cleaning experiments were triplicated for each cleaning particle using a Xeros washing apparatus as described in PCT patent publication WO 2011/098815 with a recommended dry laundry loading of 25kg. The washing cycle was carried out using 20kgs of a cotton flatware ballast. The washing cycle was run for 60 minutes at a temperature of 20°C or 70 minutes at a temperature of 40°C and using an 250gms of Pack 1 cleaning formulation supplied by Xeros Ltd. 69$m^2$ of surface area of cleaning particles were used in all cases. The liquid medium was water. The cleaning particles were recycled through the cleaning apparatus during the washing cycle for 10minutes of the washing cycle for the 20°C temperature and for 15 minutes of the washing cycle for the 40°C temperature.

After each cleaning cycle the wash load was rinsed and the washing apparatus performed a separation cycle for a period of 30 minutes.

To test the cleaning performance 5x WFK (Ref No PCMS-55 05-05x05) stain test sheets obtained from WFK Testgewebe GmbH were used for each type of cleaning particles in each of the triplicated cleaning experiments. The L*, a*, b* values of each stain were measured before and after cleaning using a spectrophotometer. For each type of cleaning particle the average delta E value was calculated according to CIE76.

### 2.2 Cleaning results

Table 3: Cleaning results

| Cleaning Particles | Average delta E (all stains) 20°C | Average delta E (all stains) 40°C | Average delta E (sebum) 20°C | Average delta E (oil/soot) 20°C | Average delta E (sebum) 40°C | Average delta E (oil/soot) 40°C |
|---|---|---|---|---|---|---|
| Comparative Example Ref. 1 | 15.73 | 17.46 | 16.38 | 10.59 | 19.18 | 12.43 |
| Example 8 | 15.79 | 17.93 | 17.05 | 10.72 | 19.66 | 13.03 |

As can be seen the cleaning results were superior when the method of the present invention was performed using the cleaning particles of Example 8 as opposed to Comparative Example Ref. 1.

## 3 Separation

### 3.1 Separation Examples and Method

The following cleaning particles as prepared in part 1 above were selected for separation experiments: Comparative Example Ref. 1, Example Ref. 2 and Example 8.

The separations experiments were repeated 5 times for each cleaning particle using a Xeros washing apparatus as described in PCT patent publication WO 2011/098815 with a recommended dry laundry loading of 25kg. The washing cycle was carried out using 20kgs of a ballast comprising long sleeved shirts each having a single pocket on the front.

The washing cycle was run for 60 minutes at a temperature of 20°C and using an 100gms of Pack 1 cleaning formulation obtained from Xeros Ltd. 69$m^2$ of surface area of cleaning particles were used in all cases. The liquid medium was water. The cleaning particles were recycled through the cleaning apparatus during the washing cycle for a total of 10 minutes.
In every case the wash load was rinsed and the separation cycle was run for 30 minutes.
After the end of the separation cycle each item of the ballast was taken out and any remaining (unseparated) cleaning particles were shaken into a large container. Once all the ballast had been shaken to remove all the cleaning particles the cleaning particles were dried and then counted. An average number of unseparated particles were calculated for all of the 5 washing experiments using each type of cleaning particle. The results are as described in Table 4.

Table 4: Separation results

| Cleaning particles | Average number of particles unseparated |
|---|---|
| Comparative Example Ref. 1 | 604.0 |
| Example 2 | 442.6 |
| Example 8 | 249.2 |

As can be seen the separation results for the cleaning particles in Examples 2 and 8 using the method of the present invention were far superior to those obtained for the cleaning particles in Comparative Example Ref. 1. This is highly desirable as the end user has far fewer unseparated cleaning particles to remove from the final wash.

**Claims**

1. Thermoplastic polyamide particles comprising at least one polyamide and at least one particulate inorganic filler having a density of at least 2.5 g/$cm^3$, the thermoplastic polyamide particles having a density of at least 1.65 g/$cm^3$, preferably at least 1.9 g/$cm^3$, and an ellipsoidal or approximately ellipsoidal shape with a largest diameter of 1 to 100 mm, preferably 2 to 10 mm, more preferably 3 to 8 mm.

2. The thermoplastic polyamide particles according to claim 1, wherein the inorganic filler is selected from metals, metal oxides, metal salts, and mixtures thereof, preferably from $BaSO_4$, $TiO_2$, ZnS, $Al_2O_3$ metals, or mixtures thereof.

3. The thermoplastic polyamide particles according to claim 1 or 2, wherein the amount of particulate inorganic fillers, based on the thermoplastic polyamide particles, is 41 to 80 wt%, preferably 50 to 80 wt%.

4. The thermoplastic polyamide particles according to any of claims 1 to 3, wherein the inorganic filler is a particulate filler, having a $D_{50}$-value of the particle size distribution of at least 10 $\mu$m.

5. The thermoplastic polyamide particles according to any of claims 1 to 4, wherein the inorganic filler is a particulate filler, having a $D_{50}$-value of the particle size distribution of at least 10 $\mu$m and a $D_{90}$-value of at least 40$\mu$m.

6. The thermoplastic polyamide particles according to claim 4 and 5, wherein the $D_{50}$-vatue of particle size distribution of the inorganic filler in the range of from 10 to 25 $\mu$m, preferably 15 to 25 $\mu$m and/or a $D_{90}$ value which is in the range of 40 to 120 $\mu$m.

7. Thermoplastic polyamide particles comprising at least one polyamide and at least one inorganic filler, which is a particulate $BaSO_4$ filler, having a $D_{50}$-value of the particle size distribution of at least 10 $\mu$m and/or a $D_{90}$-value of at least 15 $\mu$m, preferably at least 40 $\mu$m.

8. The thermoplastic polyamide particles according to claim 7, wherein the $D_{50}$-value of the $BaSO_4$ is in the range of from 10 to 25 $\mu$m, preferably 15 to 25 $\mu$m and/or the $D_{90}$ value is in the range of 40 to 120 $\mu$m.

9. The thermoplastic polyamide particles according to one of claims 1 to 8, wherein the aspect ratio of the particles is smaller than 1.2.

10. The thermoplastic polyamide particles according to any of claims 1 to 9, wherein the at least one polyamide is an

aliphatic polyamide.

**11.** The thermoplastic polyamide particles according to claim 10, wherein the at least one polyamide is nylon-6, nylon-6,6, or a blend or copolymer of these polyamides.

**12.** A method for producing thermoplastic polyamide particles according to any of claims 1 to 11 by extruding the ingredients and subsequently shaping.

**13.** The method according to claim 12, wherein the shaping is a pelletizing, preferably underwater pelletizing.

**14.** The use of thermoplastic polyamide particles according to any of claims 1 to 11 in laundering processes.

**15.** The use of claim 14 wherein unclean textiles are cleaned by agitating the textiles in the presence of a cleaning composition comprising the polyamide particles of any of claims 1 to 14 and a liquid medium.

**16.** The use according to claim 14 or 15, wherein unclean textiles are cleaned by treatment with thermoplastic polyamide particles according to any of claims 1 to 14 and washing water, the treatment being carried out in an apparatus comprising a drum with perforated side walls and a capacity of 5 to 50 l per kg of textiles to be cleaned, the thermoplastic polyamide particles being used in a weight ratio to the textiles in the range of 0.1:1-10:1, and the drum with the perforated side walls being rotated at a speed which leads to the development of g-forces in the range from 0.05 to 900 g.

**Patentansprüche**

**1.** Thermoplastische Polyamidteilchen, enthaltend mindestens ein Polyamid und mindestens einen teilchenförmigen anorganischen Füllstoff, der eine Dichte von mindestens 2,5 g/cm$^3$ aufweist, wobei die thermoplastischen Polyamidteilchen eine Dichte von mindestens 1,65 g/cm$^3$, vorzugsweise mindestens 1,9 g/cm$^3$, und eine ellipsoide oder annähernd ellipsoide Form mit einem größten Durchmesser von 1 bis 100 mm, vorzugsweise 2 bis 10 mm, weiter bevorzugt 3 bis 8 mm, aufweisen.

**2.** Thermoplastische Polyamidteilchen nach Anspruch 1, wobei der anorganische Füllstoff ausgewählt ist aus Metallen, Metalloxiden, Metallsalzen und Gemischen davon, vorzugsweise aus $BaSO_4$, $TiO_2$, Zns, $Al_2O_3$, Metallen oder Gemischen davon.

**3.** Thermoplastische Polyamidteilchen nach Anspruch 1 oder 2, wobei der Gehalt an teilchenförmigen anorganischen Füllstoffen, bezogen auf die thermoplastischen Polyamidteilchen, 41 bis 80 Gew.-%, worzugsweise 50 bis 80 Gew.-%, beträgt.

**4.** Thermoplastische Polyamidteilchen nach einem der Ansprüche 1 bis 3, wobei es sich bei dem anorganischen Füllstoff um einen teilchenförmigen Füllstoff mit einem $D_{50}$-Wert der Teilchengrößenverteilung von mindestens 10 $\mu$m handelt.

**5.** Thermoplastische Polyamidteilchen nach einem der Ansprüche 1 bis 4, wobei es sich bei dem anorganischen Füllstoff um einen teilchenförmigen Füllstoff mit einem $D_{50}$-Wert der Teilchengrößenverteilung von mindestens 10 $\mu$m und einem $D_{90}$-Wert von mindestens 40 $\mu$m handelt.

**6.** Thermoplastische Polyamidteilchen nach Anspruch 4 und 5, wobei der $D_{50}$-Wert der Teilchengrößenverteilung des anorganischen Füllstoffs im Bereich von 10 bis 25 $\mu$m, vorzugsweise von 15 bis 25 $\mu$m, liegt und/oder der $D_{90}$-Wert im Bereich von 40 bis 120 $\mu$m liegt.

**7.** Thermoplastische Polyamidteilchen, enthaltend mindestens ein Polyamid und mindestens einen anorganischen Füllstoff, bei dem es sich um einen teilchenförmigen $BaSO_4$-Füllstoff mit einem $D_{50}$-Wert der Teilchengrößenverteilung von mindestens 10 $\mu$m und/oder einem $D_{90}$-Wert von mindestens 15 $\mu$m, vorzugsweise mindestens 40 $\mu$m, handelt.

**8.** Thermoplastische Polyamidteilchen nach Anspruch 7, wobei der $D_{50}$-Wert der Teilchengrößenverteilung des $BaSO_4$ im Bereich von 10 bis 25 $\mu$m, vorzugsweise von 15 bis 25 $\mu$m, liegt und/oder der $D_{90}$-Wert im Bereich von 40 bis

120 µm liegt.

**9.** Thermoplastische Polyamidteilchen nach einem der Ansprüche 1 bis 8, wobei das Aspektverhältnis der Teilchen kleiner als 1,2 ist.

**10.** Thermoplastische Polyamidteilchen nach einem der Ansprüche 1 bis 9, wobei das mindestens eine Polyamid ein aliphatisches Polyamid ist.

**11.** Thermoplastische Polyamidteilchen nach Anspruch 10, wobei das mindestens eine Polyamid Polyamid-6, Polyamid-6.6 oder ein Blend oder Copolymer dieser Polyamide ist.

**12.** Verfahren zur Herstellung von thermoplastischen Polyamidteilchen nach einem der Ansprüche 1 bis 11 durch Extrusion der Inhaltsstoffe und nachfolgende Formgebung.

**13.** Verfahren nach Anspruch 12, **dadurch gekennzeichnet, dass** die Formgebung eine Granulierung, vorzugsweise Unterwasser-Granulierung, ist.

**14.** Verwendung von thermoplastischen Polyamidteilchen nach einem der Ansprüche 1 bis 11 in Waschverfahren.

**15.** Verwendung nach Anspruch 14, wobei unsaubere Textilien gereinigt werden durch Bewegen der Textilien in Gegenwart einer Reinigungszusammensetzung, die die Polyamidteilchen nach einem der Ansprüche 1 bis 14 und ein flüssiges Medium enthält.

**16.** Verwendung nach Anspruch 14 oder 15, wobei unsaubere Textilien gereinigt werden durch Behandlung mit thermoplastischen Polyamidteilchen nach einem der Ansprüche 1 bis 14 und Waschwasser, wobei die Behandlung in einer Vorrichtung durchgeführt wird, die eine Trommel mit perforierten Seitenwänden und einer Kapazität von 5 bis 50 l pro kg zu reinigender Textilien umfasst, wobei die thermoplastischen Polyamidteilchen in einem Gewichtsverhältnis zu den Textilien im Bereich von 0,1 : 1 - 10 : 1 eingesetzt werden und die Trommel mit den perforierten Seitenwänden mit einer Geschwindigkeit gedreht wird, die zur Ausbildung von G-Kräften im Bereich von 0,05 bis 900 G führt.

## Revendications

**1.** Particules de polyamide thermoplastique comprenant au moins un polyamide et au moins une charge inorganique particulaire ayant une masse volumique d'au moins 2,5 g/cm$^3$, les particules de polyamide thermoplastique ayant une masse volumique d'au moins 1, 65 g/cm$^3$, de préférence au moins 1, 9 g/cm$^3$, et une forme ellipsoïde ou approximativement ellipsoïde avec un plus grand diamètre de 1 à 100 mm, de préférence de 2 à 10 mm, plus préférablement de 3 à 8 mm.

**2.** Particules de polyamide thermoplastique selon la revendication 1, dans lesquelles la charge inorganique est choisie parmi des métaux, des oxydes métalliques, des sels métalliques, et des mélanges de ceux-ci, de préférence parmi des métaux de $BaSO_4$, $TiO_2$, ZnS, $Al_2O_3$, ou des mélanges de ceux-ci.

**3.** Particules de polyamide thermoplastique selon la revendication 1 ou 2, dans lesquelles la quantité de charges inorganiques particulaires, sur la base des particules de polyamide thermoplastique, est de 41 à 80 % en poids, de préférence de 50 à 80 % en poids.

**4.** Particules de polyamide thermoplastique selon l'une quelconque des revendications 1 à 3, dans lesquelles la charge inorganique est une charge particulaire, ayant une valeur de $D_{50}$ de la distribution granulométrique d'au moins 10 µm.

**5.** Particules de polyamide thermoplastique selon l'une quelconque des revendications 1 à 4, dans lesquelles la charge inorganique est une charge particulaire, ayant une valeur de $D_{50}$ de la distribution granulométrique d'au moins 10 µm et une valeur de $D_{90}$ d'au moins 40 µm.

**6.** Particules de polyamide thermoplastique selon la revendication 4 et 5, dans lesquelles la valeur de $D_{50}$ de distribution granulométrique de la charge inorganique est dans la plage de 10 à 25 µm, de préférence 15 à 25 µm et/ou la valeur de $D_{90}$ est dans la plage de 40 à 120 µm.

7. Particules de polyamide thermoplastique comprenant au moins un polyamide et au moins une charge inorganique, qui est une charge de $BaSO_4$ particulaire, ayant une valeur de $D_{50}$ de la distribution granulométrique d'au moins 10 $\mu$m et/ou une valeur de $D_{90}$ d'au moins 15 $\mu$m, de préférence au moins 40 $\mu$m.

8. Particules de polyamide thermoplastique selon la revendication 7, dans lesquelles la valeur de $D_{50}$ du $BaSO_4$ est dans la plage de 10 à 25 $\mu$m, de préférence 15 à 25 $\mu$m et/ou la valeur de $D_{90}$ est dans la plage de 40 à 120 $\mu$m.

9. Particules de polyamide thermoplastique selon one de revendications 1 à 8, dans lesquelles le facteur de forme des particules est inférieur à 1,2.

10. Particules de polyamide thermoplastique selon l'une quelconque des revendications 1 à 9, dans lesquelles l'au moins un polyamide est un polyamide aliphatique.

11. Particules de polyamide thermoplastique selon la revendication 10, dans lesquelles l'au moins un polyamide est le nylon-6, le nylon-6,6, ou un mélange ou copolymère de ces polyamides.

12. Procédé de production de particules de polyamide thermoplastique selon l'une quelconque des revendications 1 à 11, par extrusion des composants et ensuite formage.

13. Procédé selon la revendication 12, dans lequel le formage est une granulation, de préférence une granulation sous eau.

14. Utilisation de particules de polyamide thermoplastique selon l'une quelconque des revendications 1 à 11 dans des processus de blanchisserie.

15. Utilisation selon la revendication 14, dans laquelle des textiles non propres sont nettoyés par agitation des textiles en présence d'une composition nettoyante comprenant les particules de polyamide selon l'une quelconque des revendications 1 à 14 et un milieu liquide.

16. Utilisation selon la revendication 14 ou 15, dans laquelle des textiles non propres sont nettoyés par traitement avec des particules de polyamide thermoplastique selon l'une quelconque des revendications 1 à 14 et de l'eau de lavage, le traitement étant conduit dans un appareil comprenant un tambour avec des parois latérales perforées et une capacité de 5 à 50 1 par kg de textiles à nettoyer, les particules de polyamide thermoplastique étant utilisées dans un rapport en poids par rapport aux textiles dans la plage de 0,1:1 à 10:1, et le tambour avec les parois latérales perforées étant mis en rotation à une vitesse qui conduit au développement de forces g dans la plage de 0,05 à 900 g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012056252 A
- US 2013276242 A
- EP 38094 A
- EP 38582 A
- EP 39524 A
- EP 129195 A
- EP 129196 A
- DE 10313681 A
- EP 1198491 A
- EP 922065 A
- DE 2702661 A
- US 4360617 A
- WO 2004080679 A
- WO 2007128962 A
- WO 20100949959 A
- WO 2011064581 A
- WO 2011098815 A
- WO 2010128337 A
- WO 2012035342 A
- WO 2012035343 A
- WO 2012095677 A


### Non-patent literature cited in the description


- *Technics - New Materials,* 2012, vol. 21, 11-20
- **G. KOSTA ; E. REISENHOFER ; L. STAFANI.** *J. Inorg. Nucl. Chem.,* 1965, vol. 27, 2581
- **F.U. JARDINE ; L. RULE ; A.G. VOHREI.** *J. Chem. Soc.,* 1970, 238-241